# EUROPÄISCHE PATENTSCHRIFT

(11) **EP 2 641 061 B1**
(45) Veröffentlichungstag und Bekanntmachung des Hinweises auf die Patenterteilung: **06.05.2015**
(21) Anmeldenummer: 11787609.4
(22) Anmeldetag: 14.11.2011
(51) Int. Cl.: G01C 21/36, G01C 21/34

(54) **VERFAHREN ZUR AUTOMATISCHEN ERMITTLUNG EINER BEGRENZUNG EINER TEILFLÄCHE EINER GESAMTFLÄCHE**
METHOD FOR AUTOMATICALLY DETERMINING A BOUNDARY OF A PARTIAL AREA OF A TOTAL AREA
PROCÉDÉ DE DÉTERMINATION AUTOMATIQUE D'UNE DÉLIMITATION D'UNE SURFACE PARTIELLE D'UNE SURFACE GLOBALE

(30) Priorität: 19.11.2010 DE 102010051713; 19.11.2010 DE 102010051714; 17.06.2011 DE 102011105255
(43) Veröffentlichungstag der Anmeldung: 25.09.2013
(73) Patentinhaber: Audi AG, 85045 Ingolstadt (DE)
(72) Erfinder: LANGE, Rainer, 85049 Ingolstadt (DE)
(74) Vertreter: Brandt, Kai
(86) Internationale Anmeldenummer: PCT/EP2011/005715
(87) Internationale Veröffentlichungsnummer: WO 2012/065707

(56) Entgegenhaltungen:
- EP-A1- 2 172 740
- DE-A1-102008 037 262
- US-A- 5 539 399
- RATIKA PRADHAN, SHIKHAR KUMAR, RUCHIKA AGARWAL, MOHAN P. PRADHAN, M.K. GHOSE: "Contour Line Tracing Algorithm for Digital Topographic Maps", INTERNATIONAL JOURNAL OF IMAGE PROCESSING (IJIP), Bd. 4, Nr. 2, 10. Juni 2010 (2010-06-10), Seiten 156-163, XP002668771,
- Godfried Toussaint: "Chapter 2: Grids, Connectivity and Contour Tracing", , 2. September 2010 (2010-09-02), XP002668772, Gefunden im Internet: URL:http://cgm.cs.mcgill.ca/~godfried/teac hing/mir-reading-assignments/Chapter-2-Gri ds-Connectivity-Contour-Tracing.pdf [gefunden am 2012-02-01]

## Beschreibung

Die Erfindung betrifft ein Verfahren zur automatischen Ermittlung einer Begrenzung einer Teilfläche, insbesondere einer die Restreichweite eines Kraftfahrzeugs anzeigenden Teilfläche, einer Gesamtfläche, insbesondere einer Karte, wobei die Gesamtfläche in eine Matrix von rechteckigen Flächensegmenten aufgeteilt ist, von denen eine zusammenhängende Teilmenge der Teilfläche zugehörig ist. Daneben betrifft die Erfindung ein Kraftfahrzeug.

Bei verschiedenen Anwendungen, insbesondere in der Medizintechnik oder auch in der Kraftfahrzeugtechnik, ist es bekannt, dass ein Ergebnis einer Datenauswertung, insbesondere einer Auswertung von Messdaten, die Zuordnung von rechteckigen Flächensegmenten einer Gesamtfläche zu einer Teilfläche ist. Als Beispiel hierfür sind Segmentierungsalgorithmen für Bilddaten zu nennen, bei denen bestimmte Pixel als Flächensegmente einem bestimmten Objekt, beschrieben durch die Teilfläche, zugeordnet werden. Bei derartigen Fragestellungen, bei denen eine zusammenhängende Teilfläche aus rechteckigen Flächensegmenten schließlich überlagert der Gesamtfläche zur Anzeige gebracht werden soll, ist es häufig wünschenswert, eine Begrenzung, insbesondere eine Begrenzungslinie, der Teilfläche zur Verfügung zu haben, um diese beispielsweise zur Abgrenzung der Teilfläche von nicht zu der Teilfläche gehörenden Bereichen der Gesamtfläche mit anzuzeigen oder dergleichen. Dies gilt insbesondere dann, wenn die Teilfläche eine Information beschreibt, die nicht unmittelbar aus den darzustellenden Daten der Gesamtfläche ersichtlich ist, beispielsweise bei einer Restreichweite eines Kraftfahrzeugs, die gemeinsam mit den Kartendaten einer Karte angezeigt werden soll.

EP 2 172 740 offenbart ein Verfahren, welches die Restreichweite eines Fahrzeugs ermittelt und diese als hervorgehobene Teilfläche auf einem Navigationsgerät ausgibt.

Pradhan, Kumar et al. beschreiben in "Contour Line Tracing Algorithm for Digital Topographic Maps" einen Algorithmus zur Ermittlung von Randflächensegmenten zum Erstellen von Topographische Karten.

Der Erfindung liegt daher die Aufgabe zugrunde, ein einfach zu realisierendes, wenig rechenaufwendiges und verlässliches Verfahren anzugeben, um mittels einer Berechnungsvorrichtung die Begrenzung einer solchen in einer Matrix von Flächensegmenten definierten Teilfläche zu ermitteln.

Zur Lösung dieser Aufgabe ist bei einem Verfahren der eingangs genannten Art erfindungsgemäß vorgesehen, dass zunächst ausgehend von einem nicht zur Teilfläche gehörenden Bereich der Gesamtfläche ein Randflächensegment der Teilfläche aufgefunden wird und ein die Lage des Randflächensegments beschreibender erster Punkt in einen Liste von Punkten eingetragen wird, wonach am Rand der Teilfläche entlanggeschritten wird und für jedes weitere aufgefundene Randflächensegment ein die Lage des Randflächensegments beschreibender Punkt in die Liste eingetragen wird, bis wieder das dem ersten Punkt entsprechende Randflächensegment erreicht ist, wobei die Begrenzung aus der Liste von Punkten ermittelt wird.

Es wird mithin ein effizienter und schneller Algorithmus vorgeschlagen, um die Begrenzung einer Teilfläche zu ermöglichen. Grob gesagt wird zunächst ein Flächensegmente am Rand der Teilfläche aufgefunden, um eine Liste mit einem ersten Punkt zu eröffnen. Die Punkte können dabei eine Lageinformation in der Matrix (beispielsweise Zeile/Spalte) umfassen, wobei es selbstverständlich auch denkbar ist, die Punkte auf andere Weise zu definieren, beispielsweise im Falle einer Karte als eine exaktere Position auf der Karte. Ist der Rand der Teilfläche auf diese Art und Weise erst gefunden worden, so wird vorgeschlagen, letztlich am Außenrand der Teilfläche "entlangzutasten", bis man wieder das erste Flächensegment erreicht, was sichergestellt ist, nachdem die Teilfläche zusammenhängend ist. Diese Vorgehensweise lässt sich auch als "Entlangkriechen am Außenrand" oder "Crawlen" bezeichnen. Immer dann, wenn auf diese Weise ein neues Randflächensegment aufgefunden wird, wird ein entsprechender Punkt in die Liste, welche beispielsweise als eine Datenstruktur wie ein Vektor oder dergleichen realisiert werden kann, aufgenommen. Diese Vorgehensweise ist im Wesentlichen der Art und Weise nachempfunden, wie ein Mensch manuell eine äußere Begrenzung konstruieren würde. Es ist dabei im Übrigen irrelevant, ob die Teilfläche im Inneren nicht zur Teilfläche gehörende Bereiche, beispielsweise Löcher, aufweisen kann, nachdem es um die äußere Begrenzung geht, die bei einer zusammenhängenden Fläche in jedem Fall aufgefunden wird. Wird beispielsweise von einer Matrixstruktur ausgegangen, in der jedem Flächensegment der Gesamtfläche, beispielsweise als Boolesche Variable, die Information "gehört zur Teilfläche" oder "gehört nicht zur Teilfläche," zugeordnet ist, ist eine besonders einfache Realisierung möglich. Letztlich wird eine Liste von Punkten konstruiert, die in ihrer Abfolge geordnet ist, so dass beispielsweise durch Verbinden der Punkte eine Begrenzungslinie gefunden werden kann. Diese kann dann beispielsweise verwendet werden, wenn die Teilfläche, insbesondere gemeinsam mit der Gesamtfläche, angezeigt wird.

Dabei wird im Folgenden der Einfachheit halber von einem Fall ausgegangen, bei dem die Teilfläche im Inneren der Gesamtfläche liegt, also den Rand der Matrix nicht berührt. Um Fälle, in denen die Teilfläche den Rand der Gesamtfläche berührt, elegant betrachten zu können, gibt es mehrere Möglichkeiten.

So kann beispielsweise vorgesehen werden, dass die Gesamtfläche nach außen um jeweils ein weiteres, nicht zur Teilfläche gehörendes Flächensegment in jede Richtung erweitert wird. Letztlich werden der Matrix auf diese Weise zwei Zeilen und zwei Spalten hinzugefügt, die die Gesamtfläche umschließen und mit Sicherheit nicht zu der Teilfläche gehören, so dass der Algorithmus Sonderfälle, in denen die Teilfläche den Rand berührt, nicht zusätzlich abfangen muss.

Denkbar ist es jedoch auch, dass bei einer den Rand der Matrix berührenden Teilfläche entlang des Randes der Matrix vorangeschritten wird, bis wieder ein nicht zur Teilfläche gehörendes Flächensegment am Rand der Matrix aufgefunden wird. Dabei wird folglich überprüft, ob das aktuell betrachtete Randflächensegment auch ein Randsegment der Matrix ist, wonach festgestellt wird, wie lange die Teilfläche die Matrix berührt und diese Randstrecke letztlich auch als Teil der Begrenzung der Teilfläche angesehen wird. Ersichtlich sind verschiedene Möglichkeiten denkbar, den Sonderfall, dass die Teilfläche den Rand der Matrix berührt, abzudecken.

Das erfindungsgemäße Verfahren kann durch ein Computerprogramm realisiert werden, das auf einer entsprechenden Berechnungsvorrichtung durchgeführt das als erfindungsgemäße Verfahren realisiert.

In konkreter Ausgestaltung der vorliegenden Erfindung können folgende Schritte ausgeführt werden:
a) ausgehend von einem nicht zu der Teilfläche gehörenden Flächensegment, insbesondere einem Rand der Gesamtfläche, entlang eines Wegs Auffinden des ersten, zu der Teilfläche gehörenden Randflächensegments als aktuelles Randflächensegment, auf das entlang des Weges in einer aktuellen, entlang einer Reihe oder Spalte der Matrix verlaufenden Suchrichtung gestoßen wird, sodann bis zum erneuten Erreichen des ersten Randflächensegments von einem anderen Randflächensegment aus Durchführen folgender Schritte zum Auffinden weiterer Randflächensegmente:
b) Überprüfung, ob in einer bestimmten, senkrecht auf der aktuellen Suchrichtung stehenden zweiten Suchrichtung dem dem ersten Randflächensegment entgegen der aktuellen Suchrichtung benachbarten nicht zu der Teilfläche gehörenden Flächensegment benachbart ein weiteres Randflächensegment der Teilfläche vorliegt,
c) Falls die Überprüfung des Schritts b) zutrifft, Setzen des weiteren Randflächensegments als aktuelles Randflächensegrilent und der zweiten Suchrichtung als aktuelle Suchrichtung und Fortfahren mit Schritt b),
d) Ansonsten Überprüfung, ob dem aktuellen Randflächensegment in der zweiten Suchrichtung benachbart ein weiteres Randflächensegment vorliegt,
e) Falls die Überprüfung des Schrittes d) zutrifft, Setzen des weiteren Randflächensegments als aktuelles Randflächensegment, Beibehalten der aktuellen Suchrichtung und Fortfahren mit Schritt b),
f) Ansonsten Beibehalten des aktuellen Randflächensegments, Setzen der aktuellen Suchrichtung auf eine der bestimmten, zweiten Suchrichtung entgegengesetzte Suchrichtung und Fortfahren mit Schritt b).

Zunächst wird also die Matrix gescannt, in einem Algorithmus beispielsweise entlang eines Weges, der durch zwei geschachtelte "For"-Schleifen definiert wird, bis das erste "innere" Flächensegment gefunden wird, das zu der Teilfläche gehört. Dieses definiert dann, wie bereits beschrieben, auch den ersten Punkt in der Liste und ist der Anfangspunkt für das Auffinden des Rests der Begrenzung. Auf dieses erste Flächensegment stößt man in einer bestimmten Richtung, die dann auch als aktuelle Richtung für die nun folgenden Schritte des "Crawler"-Anteils angesetzt wird.

Grundsätzlich können vier unterschiedliche Suchrichtungen unterstützt werden, im konkreten Beispiel der Rechteckmatrix beispielsweise in der Richtung der Zeilen (zwei Suchrichtungen) und in der Richtung der Spalten (zwei weitere Richtungen). In einem intuitiven Bild können diese Suchrichtungen als "oben Suchen", "unten Suchen", "links Suchen" und "rechts Suchen" bezeichnet werden. Das Grundprinzip ist jedoch unabhängig von der aktuellen Suchrichtung immer das Gleiche. Die dem konkreten Vorgehen zugrunde liegenden Idee ist, es, dass das aktuelle Flächensegment, von dem aus eine Testreihe gestartet wird, ein Randflächensegment bleibt und mittels der aktuellen Suchrichtung somit immer ein Testflächensegment (entgegen der Suchrichtung dem aktuellen Randflächensegment benachbart) definiert wird, das außerhalb derTeilfläche liegt.

Geht man in einem ersten Beispiel von einer aktuellen Suchrichtung "nach oben" aus und sei ferner angenommen, dass die bestimmte, zweite Richtung eine im Uhrzeigersinn um 90° von der ersten Richtung gedrehte Richtung ist, mithin also von der aktuellen Suchrichtung aus immer nach rechts weitere-tastet wird, so lässt sich die erste Überprüfung in Schritt b) auch als "Gibt es einen rechten Nachbarn des Testflächensegments?" formulieren. Liegt ein derartiges Randflächensegment der Teilfläche als rechter Nachbar des Testflächensegments vor, wird die aktuelle Suchrichtung von "oben" in "rechts" geändert und es wird an dieser Stelle wiederum mit Schritt b) fortgefahren. Angenommen jedoch, dass rechts benachbart des Testflächensegments kein zu der Teilfläche gehörendes Randflächensegment existiert, wird im Beispiel der Suchrichtung "oben" als nächstes in Schritt d) überprüft, ob rechts neben dem aktuellen Randflächensegment ein weiteres zu der Teilfläche gehörendes Randflächensegment existiert. Ist dieser Fall gegeben, so wird dieses Randflächensegment als neues aktuelles Randflächensegment definiert, die Suchrichtung verbleibt jedoch "nach oben". Hierbei verbleibt das Testflächensegment, also das entgegen der aktuellen Suchrichtung dem aktuellen Randflächensegment benachbarte Flächensegment, das nicht zur Teilfläche gehört, außerhalb der Teilfläche, nachdem zunächst überprüft wurde, Schritt b), ob an dieser Position ein Randflächensegment der Teilfläche vorliegt.

Für den Fall aber, dass benachbart dem aktuellen Randflächensegment kein weiteres Randflächensegment existiert, bewegt sich das Testflächensegment an diese Stelle, Schritt f), indem das aktuelle Randflächensegment dasselbe bleibt, sich aber die Suchrichtung im hier betrachteten Beispiel auf "links" ändert. Dieses Vorgehen gilt selbstverständlich auch für jede der drei anderen grundlegenden möglichen Suchrichtungen.

Das Grundprinzip, dass in dieser konkreten Ausführungsform gegeben ist, falls die bestimmte, zweite Richtung eine im Uhrzeigersinn um 90° von der ersten Richtung gedrehte Richtung ist, besteht mithin aus folgenden zwei Entscheidungen und vier Aktionen:
Liegt ein rechter Nachbar des Testflächensegments vor? Wenn ja, bei gleichen Testflächensegment die aktuelle Richtung auf rechts ändern, wenn nein, weiter mit der zweiten Überprüfung:
   Liegt ein rechter Nachbar des aktuellen Randflächensegments vor? Wenn ja, Schritt nach rechts bei gleicher aktueller Suchrichtung, wenn nein, Nutzen der überprüften Position als neues Testflächensegment und Ändern der aktuellen Suchrichtung auf links in Richtung auf das aktuelle Randflächensegment.

Dieses Grundprinzip ist für alle Suchen gleich. Ausgehend von dem ersten Randflächensegment und dem ersten Testflächensegment wird immer rechts geprüft, das bedeutet, es wird nach rechts um die Teilfläche herumgehangelt ("Crawlen"). Selbstverständlich ist es auch möglich, nach links herum um die Teilfläche zu hangeln, das bedeutet, dass die bestimmte, zweite Richtung eine im Gegenuhrzeigersinn um 90° von der ersten Richtung gedrehte Richtung ist. Der Algorithmus ist diesbezüglich symmetrisch. In der Realisierung des Computerprogramms kann der hier beschriebene Algorithmus mit vier "wenn"-Abfragen realisiert werden.

Wie bereits erwähnt, lässt sich die vorliegende Erfindung mit besonderem Vorteil im Hinblick auf eine Restreichweitenanzeige in einem Kraftfahrzeug realisieren. Dabei kann das Ergebnis eines die Restreichweite des Kraftfahrzeugs bestimmenden Algorithmus die Teilfläche sein, das bedeutet, eine Menge an rechteckigen Flächensegmenten, die mit "erreichbar" (und somit zur Teilfläche gehörend) gekennzeichnet sind. Alle anderen Flächensegmente sind "nicht erreichbar" (und somit nicht zur Teilfläche gehörend). Um die ermittelte Teilfläche vorteilhaft anzeigen zu können, kann nun die Begrenzung bestimmt werden und bei der Ansteuerung einer Anzeigevorrichtung zur Anzeige der Teilfläche auf der Gesamtfläche, hier der Karte, berücksichtigt werden. Bezüglich dieser Restreichweitenfunktionalität sei zum Hintergrund noch kurz ausgeführt.

Kraftfahrzeuge mit Energiespeichersystemen für ihre auf wenigstens ein Rad des Kraftfahrzeugs wirkenden Antriebe haben eine Restreichweite, die von der aktuell im Energiespeichersystem gespeicherten Energie abhängig ist. Das Energiespeichersystem kann dabei einen Kraftstofftank und/oder eine Batterie umfassen. Grundsätzlich sind nun bereits Verfahren bekannt, um die Restreichweite eines Kraftfahrzeugs zu ermitteln und mit Hilfe einer Anzeigevorrichtung einem Fahrer zur Kenntnis zu bringen. Dabei kann beispielsweise eine derart ermittelte Teilfläche einer Kartendarstellung eines Navigationssystems überlagert dargestellt werden. Ein derartiges Vorgehen ist beispielsweise aus der DE 10 2008 037 262 A1 bekannt.

In einer Vielzahl von Verfahren ist es bekannt, Algorithmen zu verwenden, die eine Zahl von Endpunkten auf der Karte liefern, die mit der aktuell im Energiespeichersystem enthaltenen Energie des Kraftfahrzeugs noch erreicht werden können. Das bedeutet, an diesen Endpunkten ist die noch im Energiespeichersystem gespeicherte Energie aufgebraucht. Üblicherweise werden dabei die sogenannten Dijkstra-Algorithmen eingesetzt, also klassische Wegfindungs-Algorithmen, die sich schrittweise von Verzweigung zu Verzweigung auf der Karte vorarbeiten und mit einer Kostenfunktion arbeiten, die bei der Ermittlung der Restreichweite auf die Energiekosten des Befahrens des Streckenabschnitts abzielt. In der nachveröffentlichten DE 10 2010 051 546 9-53 wurde eine Alternative zum Dijkstra-Algorithmus vorgeschlagen, worin statt der Verwendung der Kartendaten wie beim Dijkstra-Algorithmus vorgeschlagen wird, diesen auf Flächensegmenten zu basieren, denen jeweils Energiekosten, gegebenenfalls richtungsabhängig, zugeordnet sind, die benötigt werden, um das jeweilige Flächensegment zu durchqueren. Es findet also ausgehend von dem Flächensegment, in dem sich die aktuelle Position des Kraftfahrzeugs befindet, eine Expansion in alle möglichen Richtungen statt, so dass das Ergebnis des dort beschriebenen Algorithmus eine Menge von Endflächensegmenten als Endpunkte ist, aus denen sich eine Begrenzung einer Teilfläche ergeben kann.

Es wurde jedoch festgestellt, dass bei solchen eine Punktewolke von maximal noch erreichbaren Punkten bzw. Flächensegmenten ergebenden Algorithmen, wobei die Endpunkte gespeichert werden, wenn die noch vorhandene Restenergie aufgebraucht ist, Probleme auftreten, denn eine Teilfläche, die durch das Verbinden dieser Endpunkte, beispielsweise zur Bindung eines Polygons durch einen Polygonzug, beschrieben wird, wozu beispielsweise der bekannte Algorithmus "konvexe Hülle" angesetzt werden kann, beschreiben nicht immer exakt bzw. sinnvoll die noch mit der vorhandenen Restenetgie erreichbaren Bereiche der Karte. Hierbei können nach von der Anmelderin durchgeführten Tests Fehler von beispielsweise 30 - 40 % auftreten, das bedeutet, dass beispielsweise 30 % der angezeigten Restreichweitegebiete gar nicht mehr erreichbar wären. Insbesondere können degenerative Sonderfälle auftreten, beispielsweise dann, wenn gewisse Bereiche verkehrstechnisch nicht erschlossen sind. Befindet man sich beispielsweise an der Ecke einer Insel, kann es sein, dass es in gewissen Bereichen um die aktuelle Position des Kraftfahrzeugs herum keinen ermittelten erreichbaren Endpunkt gibt, nachdem dort schlichtweg nur das Meer, nicht aber Straßen existieren. Berechnet man nun aus Endpunkten die Teilfläche, beispielsweise als Ergebnis einer Hüllberechnung, insbesondere einer konvexen Hülle, um die Dijkstra-Endpunkte, werden eigentlich erreichbare Gebiete ausgeschlossen. Jedoch führen auch andere Effekte zu Fehlern.

Es kann mithin zur Lösung dieses Problems vorgesehen werden, dass bei einer durch Merkmale beschriebenen Karte, wobei die Restreichweite in Abhängigkeit einer in dem Energiespeichersystem gespeicherten Energie durch einen von der aktuellen Position des Kraftfahrzeugs ausgehenden expandieren Algorithmus ermittelt wird, immer dann, wenn im Rahmen des Expansion ein in einem Flächensegment liegendes oder einem Flächensegment entsprechendes Merkmal hinzugefügt wird, das Flächenelement zu der Teilfläche hinzugefügt wird. Auf diese Weise wird die Teilfläche in ihrer Grundform bereits während der Durchführung des Wegfindungsalgorithmus zu den maximal erreichbaren Endpunkten ermittelt. Einzelne Flächensegmente werden als "besucht" bzw. "erreichbar" markiert, so dass eine im erfindungsgemäßen Verfahren verwendbare Teilfläche entsteht, die zwangsläufig zusammenhängend ist und durch innerhalb einer Matrix liegende Flächensegmente einer Gesamtfläche, der Karte, definiert wird. Bei einem Vorgehen, bei dem während eines Wegfindungsalgorithmus Flächensegmente markiert werden, ist es mithin letztlich irrelevant, ob tatsächlich ein Endpunkt erreicht wird, bei dem die im Energiespeichersystem gespeicherte Energie vollständig aufgebraucht wird, nachdem auch bei betrachteten Wegen, die in einer nicht weiterführbaren Sackgasse oder dergleichen enden, die entsprechenden Flächensegmente als zu der Teilfläche gehörend markiert werden können. Hierdurch ergibt sich nicht nur eine höhere Genauigkeit bei der Berechnung der Restreichweiten-Teilfläche, sondern es entfallen auch degenerative Sonderfälle.

In besonders vorteilhafter Ausgestaltung der vorliegenden Erfindung kann mithin vorgesehen sein, dass zur Ermittlung der die Restreichweite eines Kraftfahrzeugs beschreibenden Teilfläche in der Karte anhand eines auf den Flächensegmenten zugeordneten Energiekosten zum Durchfahren des Flächensegments basierenden Algorithmus, bei dem ausgehend von der aktuellen Position des Kraftfahrzeugs im Rahmen einer Wegfindung zu jeweils benachbarten Flächensegmenten expandiert wird, bis eine in einem Energiespeichersystem für einen auf wenigstens ein Rad des Kraftfahrzeugs wirkenden Antrieb enthaltene Restenergie aufgebraucht ist, jedes bei der Wegfindung des Algorithmus besuchte Flächensegment als der Teilfläche zugehörig markiert wird. Selbstverständlich sind neben dem beispielsweise in der nachveröffentlichten Patentanmeldung DE 10 2010 051 546.9-53 beschriebenen, auf mit Energiekosten versehenen Flächensegmenten basierenden Algorithmus auch andere Algorithmen denkbar, beispielsweise übliche Dijkstra-Algorithmen, bei denen ein Flächensegment der Karte als zu der Teilfläche gehörig markiert wird, wenn ein durch den Algorithmus besuchtes Merkmal der Karte innerhalb des Flächensegments liegt. Es wird also zunächst ein Restreichweitenalgorithmus durchgeführt, dessen Ergebnis eine Matrix von Flächensegmenten ist, die alle die individuelle Information "erreichbar" oder "nicht erreichbar" tragen. "Erreichbare" Flächensegmente bilden die Teilfläche. Dabei sei an dieser Stelle angemerkt, dass selbstverständlich die Teilfläche innere "Löcher" aufweisen kann, nachdem Flächen ohne Straßenabdeckung existieren können.

In weiterer Ausgestaltung der vorliegenden Erfindung kann allgemein vorgesehen sein, dass als Punkt zur Ermittlung einer eine Begrenzung der Teilfläche darstellenden Linie ein Mittelpunkt und/oder ein anderer ausgezeichneter Punkt des Flächensegments betrachtet wird. Es ist also denkbar, eine Begrenzungslinie aus den Punkten zu bestimmen, wobei ausgezeichnete Punkte des Flächensegments, insbesondere ein Mittelpunkt, betrachtet werden. Diese Punkte können dann verbunden werden, so dass beispielsweise als Begrenzung ein Polygonzug ermittelt wird, sich mithin die Teilfläche durch ihre Begrenzungslinie als ein Polygon darstellt.

Besonders vorteilhaft ist es, wenn die ermittelte Begrenzung zur Darstellung der Teilfläche gemeinsam mit der Gesamtfläche, insbesondere der Karte, verwendet wird. Die ermittelten Informationen bezüglich der Begrenzung, insbesondere der Begrenzungslinie, werden also eingesetzt, um eine Anzeigevorrichtung, insbesondere in einem Kraftfahrzeug, so anzusteuern, dass die Teilfläche durch ihre Begrenzung innerhalb ihrer Gesamtfläche, insbesondere von einem Navigationssystem dargestellter Kartendaten der Karte, angezeigt werden kann.

Insbesondere gemeinsam mit der beschriebenen Restreichweitenberechnung, die als Ergebnis die Teilfläche liefert, ergibt sich somit ein besonders vorteilhaftes, einfach zu realisierendes und unter geringem Rechenaufwand durchführbares Gesamtkonzept zur Ermittlung, Aufbereitung und Anzeige einer Restreichweite eines Kraftfahrzeugs.

Neben dem Verfahren betrifft die Erfindung auch ein Kraftfahrzeug, umfassend einen auf wenigstens ein Rad des Kraftfahrzeugs wirkenden Antrieb, ein Energiespeichersystem für einen Antrieb und eine zur Durchführung des erfindungsgemäßen Verfahrens bezüglich einer die Restreichweite des Kraftfahrzeugs beschreibenden Teilfläche ausgebildete Berechnungsvorrichtung. Sämtliche Ausführungen bezüglich des erfindungsgemäßen Verfahrens lassen sich analog auf das erfindungsgemäße Kraftfahrzeug übertragen, so dass die bereits diskutierten Vorteile, die sich insbesondere in Kombination mit einem Flächensegmente einer Karte markierenden Algorithmus ergeben, erreicht werden können.

Das Energiespeichersystem kann einen Kraftstofftank und/oder eine Batterie umfassen. Die vorliegende Erfindung lässt sich mithin sowohl in reinen Verbrennungsmotor-Kraftfahrzeugen und Elektrokraftfahrzeugen als auch in Hybridfahrzeugen anwenden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze des erfindungsgemäßen Kraftfahrzeugs,
- Fig. 2: einen Ablaufplan des erfindungsgemäßen Verfahrens,
- Fig. 3: eine mögliche Teilfläche in einer Matrix von Flächensegmenten,
- Fig. 4 bis Fig. 7: Skizzen zu einzelnen Schritten des erfindungsgemäßen Verfahrens, und
- Fig. 8: eine mögliche Anzeige der Teilfläche in einer Karte.

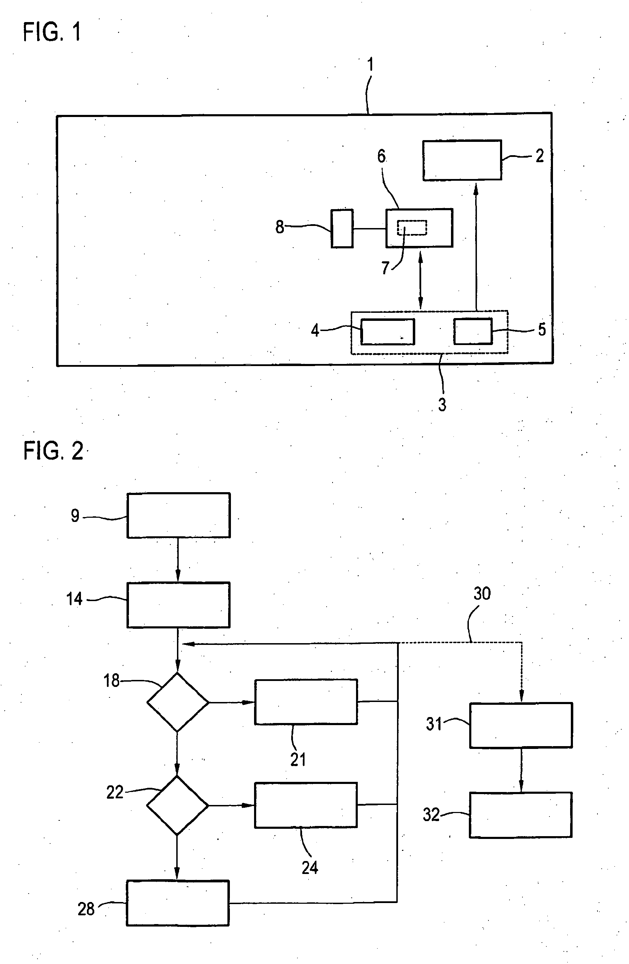

Fig. 1 zeigt eine Prinzipskizze eines erfindungsgemäßen Kraftfahrzeugs 1. Dabei handelt es sich vorliegend um ein Hybridfahrzeug, das bedeutet, dass dem auf wenigstens ein Rad des Kraftfahrzeugs 1 wirkenden Antrieb 2 zugeordnete Energiespeichersystem 3 umfasst sowohl einen Kraftstofftank 4 wie auch eine Batterie 5. Daten über die aktuell in dem Energiespeichersystem 3 vorhandene Restenergie werden an ein Navigationssystem 6 weitergeleitet, welches eine-Berechnungsvorrichtung 7 umfasst. Die Berechnungsvorrichtung 7 ist zur Durchführung des erfindungsgemäßen Verfahrens ausgebildet.

Sie ermittelt anhand eines Wegfindungs-Algorithmus, der auf Flächensegmenten, in die eine Karte aufgeteilt ist, zugeordneten Energiekosten zum Durchqueren des Flächensegments beruht, eine Teilfläche, die die vom Kraftfahrzeug 1 noch erreichbaren Bereiche der Karte mit der vorhandenen Restenergie, mithin die Restreichweite des Kraftfahrzeugs, beschreibt. Ergebnis des Algorithmus sind alle Flächensegmente, die von dem Algorithmus besucht wurden, mithin eine zusammenhängende Teilfläche, die aus Flächensegmenten gebildet ist. Bildet also die Karte als Gesamtfläche eine Matrix von Flächensegmenten, so wird die Teilfläche durch eine zusammenhängende Untermenge von Flächensegmenten gebildet. Vorliegend wird dies einfach dadurch realisiert, dass jedem Flächensegment als Boolesche Angabe zugeordnet ist, ob das Flächensegment der Teilfläche zugehörig ("erreichbar") oder nicht zugehörig ("nicht erreichbar") ist. In der Berechnungsvorrichtung 7 wird ferner die Begrenzung der Teilfläche ermittelt, wobei am Rand der Teilfläche entlanggeschritten wird, bis ein zuerst aufgefundenes Randflächensegment wieder erreicht ist, was im Folgenden noch näher dargestellt werden soll.

Das Navigationssystem 6 ist ferner mit einer Anzeigevorrichtung 8 verbunden, die anhand der bestimmten Begrenzung der Teilfläche derart ansteuerbar ist, dass die die Restreichweite beschreibende Teilfläche gemeinsam mit der Karte, also der Gesamtfläche, angezeigt werden kann.

Fig. 2 zeigt einen Ablaufplan eines Ausführungsbeispiels des erfindungsgemäßen Verfahrens. Darin wird zunächst in einem Schritt 9 mittels eines Wegfindungs-Algorithmus, wie er durch die nachveröffentlichte Patentanmeldung DE 10 2010 051 546.9-53 beschrieben wird, die Restreichweite des Kraftfahrzeugs ermittelt. Dabei wird von einem Flächensegment ausgegangen, das der aktuellen Position des Kraftfahrzeugs 1 entspricht. Allen Flächensegmenten der Karte sind nun Energiekosten zugeordnet, gegebenenfalls richtungsabhängig, die angeben, wie viel von der verbliebenen Restenergie es das Kraftfahrzeug 1 kostet, das Flächensegment zu durchqueren. Ausgehend vom Startflächensegment wird nun expandiert, bis die in den Energiespeichersystem noch verbliebene Restenergie aufgebraucht ist, wobei während dieser Expansion jedes besuchte Flächensegment als "erreichbar" markiert wird. So entsteht im Verlauf des Schrittes 9 die Teilfläche, die die Restreichweite des Kraftfahrzeugs 1 beschreibt. Zum Abschluss des Wegfindungsalgorithmus sind mithin in der Matrix der rechteckigen Flächensegmente einige zusammenhängende Flächensegmente als "erreichbar" markiert, so dass sich die Teilfläche ergibt.

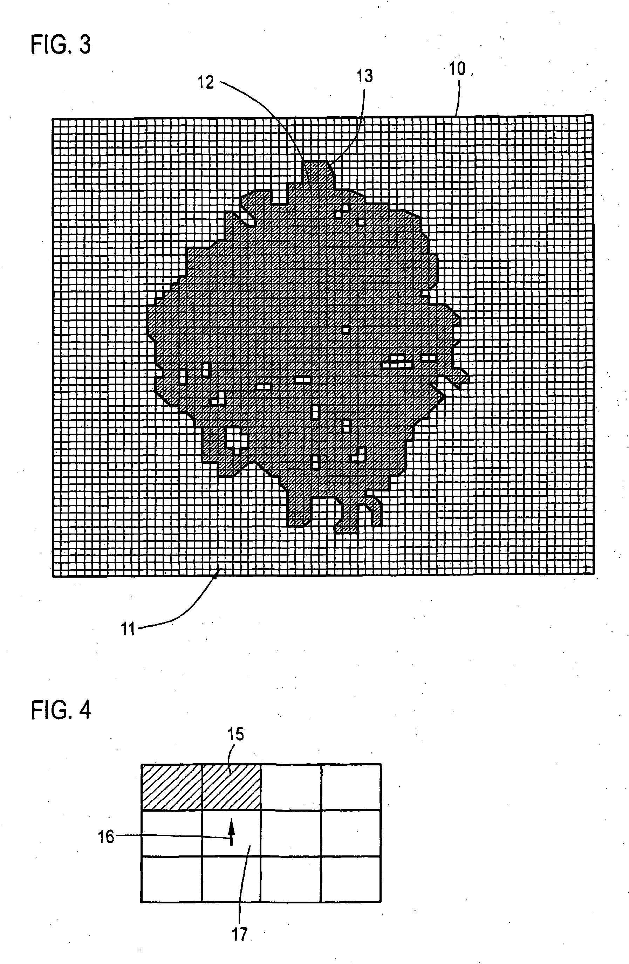

Dies ist anhand eines Beispiels in Fig. 3 näher dargestellt.

Die Karte 10, deren Kartendaten zur einfacheren Darstellbarkeit hier nicht dargestellt sind, ist offensichtlich in eine Matrix aus rechteckigen Flächensegmenten 11 einer vorbestimmten Größe aufgeteilt. Die Teilfläche 12 befindet sich hier gänzlich im Inneren der Matrix. Ziel ist es nun, eine Begrenzung 13 der Teilfläche 12, im vorliegenden Beispiel in Form einer Begrenzungslinie, aufzufinden, um eine verbesserte Darstellung der Restreichweite gemeinsam mit den Kartendaten einer Anzeigevorrichtung 8 zu ermöglichen.

Diesem Ziel dienen nun die im Folgenden beschriebenen Schritte, wobei zur einfacheren Darstellung davon ausgegangen werden soll, dass sich alle Flächensegmente der Teilfläche 12 vom Rand beabstandet befinden. Dieser Zustand lässt sich im Übrigen auch leicht künstlich erzeugen, indem auf jeder Seite der Matrix eine Zeile bzw. Spalte nicht zur Teilfläche 12 gehörender Matrixelemente hinzugefügt wird. Denkbar sind jedoch auch andere Sonderfallbehandlungen, die an den Rand der Karte 10 reichende Teilflächen 12 behandeln.

Es sei an dieser Stelle noch angemerkt, dass die in Fig. 3 dargestellte Größe der Flächensegmente selbstverständlich beispielhaft zu verstehen ist; letztlich ist die Größe der Flächensegmente abhängig von der gewollten Genauigkeit frei wählbar.

Im erfindungsgemäßen Verfahren soll nun zunächst ein Randflächensegment der Teilfläche aufgefunden werden, welches als erstes Randflächensegment den Startpunkt für ein "Entlanghangeln" (Crawlen) entlang des äußeren Rands der Teilfläche 12 bietet. Hierzu wird in einem Schritt 14 vom Rand der Gesamtfläche, dort einem nicht zur Teilfläche gehörenden Flächensegment, ausgehend entlang eines Wegs überprüft, ob die dabei angetroffenen Flächensegmente zu der Teilfläche gehören. Wird ein solches erstes, zu der Teilfläche gehörendes Randflächensegment (ein solches ist es zwangsläufig) aufgefunden, so wird abgebrochen und das erste zu der Teilfläche gehörende Randflächensegment wird als aktuelles Randflächensegment setzt. Die Suchrichtung, in der auf das Randflächensegment gestoßen wurde, wird als die aktuelle Suchrichtung festgelegt.

Eine Liste wird eröffnet, in die ein die Lage des ersten Randflächensegments beschreibender Punkt, beispielsweise die Position des Randflächensegments in der Matrix und/oder der Mittelpunkt des Randflächensegments, eingetragen wird. In diese Liste werden dann später sämtliche weiteren aufgefundenen Randflächensegmenten zugeordneten Punkte ebenso eingetragen.

Eine mögliche Situation, die sich nach dem Auffinden des ersten Randflächensegments 15 ergibt, ist in Fig. 4 dargestellt. Auf das erste Randflächenelement 15 wurde in der durch den Pfeil 16 angedeuteten Suchrichtung gestoßen, welche mithin die aktuelle Suchrichtung darstellt. Das Flächensegment, von dem aus in der Suchrichtung auf das Randflächensegment 15 gestoßen wurde, also das entgegen der Suchrichtung der Randflächensegment 15 benachbarte Flächensegment, soll im Folgenden als Testflächensegment 17 bezeichnet werden. Das Testflächensegment 17 liegt grundsätzlich außerhalb der Teilfläche 12 und ist letztlich das Flächensegment, von dem aus der Rand der Teilfläche 12 sozusagen "abgetastet" wird.

Dieses Abtasten, nachdem das Randflächensegment 15 als aktuelles Randflächensegment, die Suchrichtung gemäß dem Pfeil 16 als aktuelle Suchrichtung und das Testflächensegment 17 als aktuelles Testflächensegment definiert wurden, soll nun näher erläutert werden. Abbruchbedingung, also die Bedingung dafür, dass die gesamte Begrenzung 13 der Teilfläche 12 aufgefunden wurde, ist, dass das erste Randflächensegment 15 von einem anderen aktuellen Randflächensegment ausgehend wieder aufgefunden wurde.

Dabei existieren innerhalb der Matrix grundsätzlich vier senkrecht aufeinander stehende Suchrichtungen, nämlich entlang der Spalten bzw. entlang der Zeilen. Im Folgenden soll das Grundprinzip des erfindungsgemäßen Verfahrens zur Vereinfachung an dem in Fig. 4 dargestellten Fall erläutert werden, in dem die aktuelle Suchrichtung "nach oben" weist. Die Ausführungen lassen sich selbstverständlich analog auf jede andere mögliche Suchrichtung übertragen. Im folgenden Ausführungsbeispiel soll ferner davon ausgegangen werden, dass eine zweite betrachtete Suchrichtung sich aus der aktuellen Suchrichtung durch eine Drehung im Uhrzeigersinn um 90° ergibt; im dargestellten Ausführungsbeispiel der Suchrichtung "nach oben" als aktuelle Suchrichtung ist die zweite Suchrichtung also "rechts".

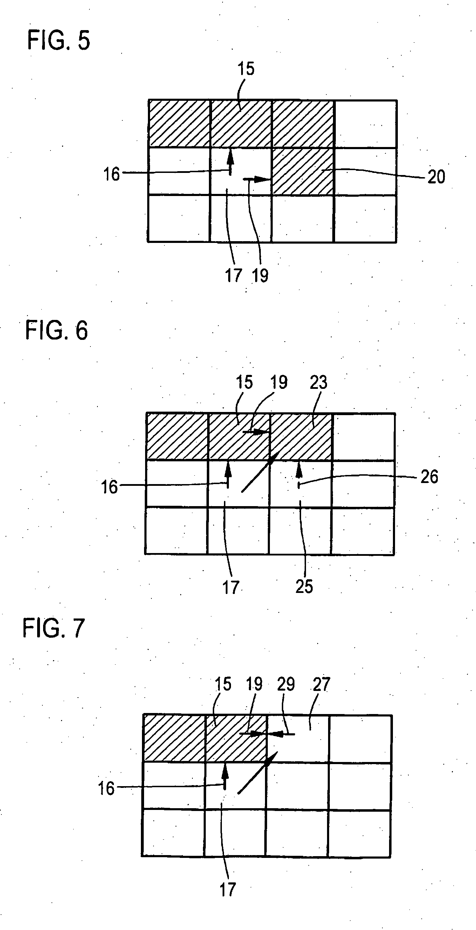

In einem Schritt 18 wird nun überprüft, ob sich in der zweiten Suchrichtung-also "rechts" - benachbart dem Testflächensegment 17 ein zur Teilfläche 12 gehörendes weiteres Randflächensegment 20 befindet, was durch die beispielhafte Situation in Fig. 5 näher dargestellt werden soll, in der die zweite Suchrichtung durch den Pfeil 19 symbolisiert wird. Ergibt die Überprüfung, dass es sich bei dem dem Testflächensegment 17 benachbarten Flächensegment tatsächlich um ein Randflächensegment 20 der Teilfläche 12 handelt, so wird in einem Schritt 21 das weitere Randflächensegment 20 als neues aktuelles Randflächensegment 15 gesetzt und die zweite Suchrichtung, symbolisiert durch den Pfeil 19, wird als neue aktuelle Suchrichtung gewählt. Sodann wird wiederum mit dem Schritt 18 fortgefahren.

Ergibt die Überprüfung des Schritts 18 nun aber, dass das dem Testflächensegment 17 rechts benachbarte Flächensegment frei ist, also nicht zur Teilfläche 12 gehört, so wird mit Schritt 22 fortgefahren. Dort findet eine weitere Überprüfung statt, nämlich, wie beispielhaft in einer Situation durch die Fig. 6 erläutert, ob es sich bei dem rechts dem aktuellen Randflächensegment 15 benachbarten Flächensegment um ein weiteres Randflächensegment 23 handelt, also ob das rechts dem aktuellen Randflächensegment 15 benachbarte Flächensegment ein zu der Teilflächen 12 gehöriges Randflächensegment 23 ist. Ausgehend von dem Testflächensegment 17 wird also nun diagonal rechts getastet.

Liegt ein derartiges weiteres Randflächensegment 23 vor, so wird in einem Schritt 24 das weitere Randflächensegment 23 als neues aktuelles Randflächensegment 15 definiert, die aktuelle Suchrichtung bleibt unverändert, so dass sich das aktuelle Testflächensegment 17 ebenso einen Schritt nach rechts auf das nicht zur Teilfläche gehörige Flächensegment 25 verschiebt. Dass dieses Flächensegment 25 kein Randflächensegment der Teilfläche 12 sein kann, ist bereits aus der Überprüfung in Schritt 18 bekannt. Danach wird mit Schritt 18 anhand der neuen Situation, dargestellt durch den gestrichelten Pfeil 26, fortgefahren.

Schließlich bleibt noch der Fall zu betrachten, dass in Schritt 22 festgestellt wird, dass das rechts dem aktuellen Randflächensegment 15 benachbarte Flächensegment nicht zu der Teilfläche 12 gehört, was anhand eines Beispiels in Fig. 7 dargestellt ist. Ersichtlich ist dort das Flächensegment 27 unbesetzt.

In einem Schritt 28 wird für diesen Fall das aktuelle Randflächensegment 15 beibehalten, allerdings wird die Suchrichtung in die der zweiten Suchrichtung entgegengesetzte Richtung, hier also nach links, geändert, Pfeil 29. Daraus ergibt sich, däss das aktuelle Testflächensegment 17 nun als das Flächensegment 27 gesetzt ist. Nach dieser Änderung der Definition der aktuellen Suchrichtung 29 (und konsequenterweise des Testflächensegments) wird wiederum mit Schritt 18 fortgefahren.

Hieraus ergibt sich insgesamt, dass nach rechts, also entgegen des Uhrzeigersinns, entlang des Randes der Teilfläche 12 gelaufen wird, wobei jedes neu aufgefundene Randflächensegment als Punkt in der Liste vermerkt wird. Ergebnis ist mithin, sobald das erste Randflächensegment wieder erreicht wurde, gestrichelter Pfeil 30, eine vorliegende Liste von Punkten, die nun im vorliegenden Ausführungsbeispiel in einem Schritt 31 zu einer Begrenzungslinie verbunden werden, es ergibt sich mithin ein Polygonzug, wie es auch in Fig. 3 als Begrenzung 13 bereits dargestellt wurde.

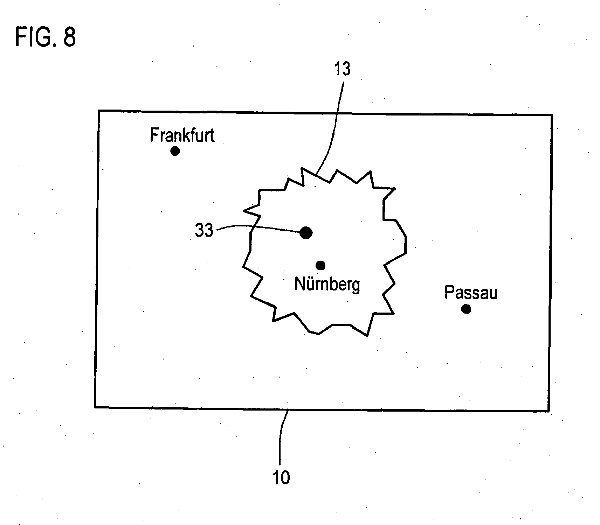

Diese Information wird nun in einem Schritt 32 zur Ansteuerung der Anzeigevorrichtung 8 genutzt, um die die erreichbaren Gebiete beschreibende Teilfläche 12 gemeinsam mit den Kartendaten der Karte 10 auf der Anzeigevorrichtung 8 darstellen zu können, wobei eine beispielhafte Anzeige als Prinzipskizze in Fig. 8 dargestellt ist. Den Kartendaten der Karte 10, beispielsweise Straßen, Orte und dergleichen, ist neben der aktuellen Position 33 des Kraftfahrzeugs 1 auch die Begrenzung 13 überlagert dargestellt.

Die beispielhaft erläuterten Schritte 14 sowie 18, 21, 22, 24 und 28 können als ein Pseudocode-Algorithmus folgendermaßen aufgeschrieben werden. Der Schritt 14 lässt sich durch folgendes Vorgehen beschreiben:

```
 all: for (i=0;i<numberOfRectsLon;i++) {
    for (j=0;j<numberOfRectsLat; j++) {
           if (inside (i,j))) {
                 // x und y sind die Koordinaten des Rechtecks
                 p = new Point (x,y);
                 // Addieren dieses ersten Punkts, z. B. zu einem Vektor v,
                 // in dem alle Ergebnispunkte in der richtigen Reihenfolge
                 // gehalten werden
                 v.add(p);
                 // wir können jetzt stoppen - der Anfangspunkt wurde gefunden
                 break all;
           }
    }
    }
```

Dabei überprüft die Funktion "inside", ob das an der Position i,j der Matrix befindliche Flächensegment Teil der Teilfläche 12 ist. Es wird also die Matrix zeilen- und spaltenmäßig durchlaufen, bis das erste Randflächensegment gefunden wurde. Die Variable "v" stellt die Liste dar.

Ebenso lassen sich die durch die Schritte 18, 21, 22, 24 und 28 beschriebenen Überprüfungen und Aktionen durch einen Pseudocode wie folgt beschreiben (i und j sind darin die Position des Testflächensegments):

```
 if (crawl_dir == CRAWL_UP) {
     if (inside (i+1,j)) {
     // Testen auf rechten Nachbarn
              p = new Point (x,y);
             //Addieren dieses Punkts zum Ergebnisvektor v
             v.add (p);
             // Crawt-Richtung ändern
             crawl_dir = CRAWL_RIGHT;
             // direkt mit der neuen Schleife starten
             continue;
     } else if (inside (i+1,j+1))) {
     // Testen des diagonalen rechten Rechtecks
              p = new Point (x,y)
              // Addieren dieses Punkts zum Ergebnisvektor v
              v.add (p);
              // eine Position nach rechts bewegen
              i = i+1;
     } else {
     // diagonal rechts keinen Nachbarn gefunden, dorthin springen
     // und
     // Suchrichtung in "links" ändern
              i=i+1;
              j = j+1;
              crawl_dir = CRAWL_LEFT;
              continue;
     }
     }
```

Dabei ist hier als Beispielfall wieder die aktuelle Suchrichtung "oben" dargestellt; selbstverständlich gibt es auch andere Möglichkeiten, das Verfahren als ein Computerprogramm zu realisieren, insbesondere, indem alle möglichen Suchrichtungen in einem gemeinsamen Code abgehandelt werden.

Ein derartiges Computerprogramm, das das erfindungsgemäße Verfahren durchführt, kann auf der Berechnungsvorrichtung 7 abgelegt sein.

## Patentansprüche

1. Verfahren zur automatischen Ermittlung einer Begrenzung (13) einer die Restreichweite eines Kraftfahrzeugs (1) anzeigenden Teilfläche (12) einer Gesamtfläche, insbesondere einer Karte (10), wobei die Gesamtfläche in eine Matrix von rechteckigen Flächensegmenten (11, 15, 17, 20, 23, 25, 27) aufgeteilt ist, von denen eine zusammenhängende Teilmenge der Teilfläche (12) zugehörig ist, und wobei die Teilfläche (12) das Ergebnis eines die Restreichweite des Kraftfahrzeugs (1) bestimmenden Algorithmus ist,
**dadurch gekennzeichnet,**
**dass** zunächst ausgehend von einem nicht zur Teilfläche (12) gehörenden Bereich der Gesamtfläche ein Randflächensegment (15, 20, 23) der Teilfläche (12) aufgefunden wird und ein die Lage des Randflächensegments (15, 20, 23) beschreibender erster Punkt in eine Liste von Punkten eingetragen wird, wonach am Rand der Teilfläche (12) entlang geschritten wird und für jedes weitere aufgefundene Randflächensegment (15, 20, 23) ein die Lage des Randflächensegments (15, 20, 23) beschreibender Punkt in die Liste eingetragen wird, bis wieder das dem ersten Punkt entsprechende Randflächensegment (15, 20, 23) erreicht ist, wobei die Begrenzung aus der Liste von Punkten ermittelt wird.

2. Verfahren nach Anspruch 1,
**dadurch gekennzeichnet,**
**dass** folgende Schritte ausgeführt werden:
a) ausgehend von einem nicht zu der Teilfläche (12) gehörenden Flächensegment, insbesondere einem Rand der Gesamtfläche, entlang eines Wegs Auffinden des ersten, zu der Teilfläche gehörenden Randflächensegments (15, 20, 23) als aktuelles Randflächensegment (15, 20, 23), auf das entlang des Weges in einer aktuellen, entlang einer Reihe oder Spalte der Matrix verlaufenden Suchrichtung gestoßen wird, sodann bis zum erneuten Erreichen des ersten Randflächensegments (15, 20, 23) von einem anderen Randflächensegment (15, 20, 23) aus Durchführen folgender Schritte zum Auffinden weiterer Randflächensegmente (15, 20 23):
b) Überprüfung, ob in einer bestimmten, senkrecht auf der aktuellen Suchrichtung stehenden zweiten Suchrichtung dem dem ersten Randflächensegment (15, 20, 23) entgegen der aktuellen Suchrichtung benachbarten nicht zu der Teilfläche (12) gehörenden Flächensegment (17, 25, 27) benachbart ein weiteres Randflächensegment (15, 20, 23) der Teilfläche (12) vorliegt,
c) Falls die Überprüfung des Schritts b) zutrifft, Setzen des weiteren Randflächensegments (15, 20, 23) als aktuelles Randflächensegment (15, 20, 23) und der zweiten Suchrichtung als aktuelle Suchrichtung und Fortfahren mit Schritt b),
d) Ansonsten Überprüfung, ob dem aktuellen Randflächensegment (15, 20, 23) in der zweiten Suchrichtung benachbart ein weiteres Randflächensegment (15, 20, 23) vorliegt,
e) Falls die Überprüfung des Schrittes d) zutrifft, setzen des weiteren Randflächensegments (15, 20, 23) als aktuelles Randflächensegment (15, 20, 23), Beibehalten der aktuellen Suchrichtung und Fortfahren mit Schritt b),
f) Ansonsten Beibehalten des aktuellen Randflächensegments (15, 20, 23), Setzen der aktuellen Suchrichtung auf eine der bestimmten, zweiten Suchrichtung entgegengesetzte Suchrichtung und Fortfahren mit Schritt b).

3. Verfahren nach Anspruch 2,
**dadurch gekennzeichnet,**
**dass** die bestimmte, zweite Suchrichtung eine im Uhrzeigersinn um 90° von der aktuellen Suchrichtung gedrehte Richtung ist.

4. Verfahren nach einem der vorangehenden Ansprüche,
**dadurch gekennzeichnet,**
**dass** zur Ermittlung der die Restreichweite eines Kraftfahrzeugs (1) beschreibenden Teilfläche (12) in der Karte (10) anhand eines auf den Flächensegmenten (11, 15, 17, 20, 23, 25, 27) zugeordneten Energiekosten zum Durchfahren des Flächensegments (11, 15, 17, 20, 23, 25, 27) basierenden Algorithmus, bei dem ausgehend von der aktuellen Position (33) des Kraftfahrzeugs (1) im Rahmen einer Wegfindung zu jeweils benachbarten Flächensegmenten (11, 15, 17, 20, 23, 25, 27) expandiert wird, bis eine in einem Energiespeichersystem (3) für einen auf wenigstens ein Rad des Kraftfahrzeugs (1) wirkenden Antrieb (2) enthaltene Restenergie aufgebraucht ist, jedes bei der Wegfindung des Algorithmus besuchte Flächensegment (11, 15, 17, 20, 23, 25, 27) als der Teilfläche (12) zugehörig markiert wird.

5. Verfahren nach einem der vorangehenden Ansprüche,
**dadurch gekennzeichnet,**
**dass** als Punkt zur Ermittlung einer eine Begrenzung (13) der Teilfläche (12) darstellenden Linie ein Mittelpunkt und/oder ein anderer ausgezeichneter Punkt des Flächensegments (11, 15, 17, 20, 23, 25, 27) betrachtet werden.

6. Verfahren nach einem der vorangehenden Ansprüche,
**dadurch gekennzeichnet, dass** als Begrenzung (13) ein Polygonzug ermittelt wird.

7. Verfahren nach einem der vorangehenden Ansprüche,
**dadurch gekennzeichnet,**
**dass** die ermittelte Begrenzung (13) zur Darstellung der Teilfläche (12) gemeinsam mit der Gesamtfläche, insbesondere der Karte (10), verwendet wird.

8. Verfahren nach einem der vorangehenden Ansprüche,
**dadurch gekennzeichnet,**
**dass** die Teilfläche (12) nicht den Rand der Matrix berührt.

9. Verfahren nach einem der Ansprüche 1 bis 7,
**dadurch gekennzeichnet,**
**dass** bei einer den Rand der Matrix berührenden Teilfläche (12) entlang des Randes der Matrix vorangeschritten wird, bis wieder ein nicht zur Teilfläche (12) gehörendes Flächensegment (17, 25, 27) am Rand der Matrix aufgefunden wird.

10. Kraftfahrzeug (1), umfassend einen auf wenigstens ein Rad des Kraftfahrzeugs (1) wirkenden Antrieb (2), ein Energiespeichersystem (3) für den Antrieb (2) und eine zur Durchführung eines Verfahrens nach einem der vorangehenden Ansprüche bezüglich einer die Restreichweite des Kraftfahrzeugs (1) beschreibenden Teilfläche ausgebildete Berechnungsvorrichtung (7).

## Claims

1. Method for automatically determining a boundary (13) of a sub-portion (12) of a total portion, in particular of a map (10), which sub-portion depicts the remaining range of a motor vehicle (1), the total portion being divided into a matrix of rectangular portion segments (11, 15, 17, 20, 23, 25, 27), an interconnected subset of which is associated with the sub-portion (12), and the sub-portion (12) being the result of an algorithm which determines the remaining range of the motor vehicle (1),
**characterised in that**,
initially starting from a region of the total portion not belonging to the sub-portion (12), an edge portion segment (15, 20, 23) of the sub-portion (12) is located and a first point which denotes the position of the edge portion segment (15, 20, 23) is entered into a list of points, after which steps are taken along the edge of the sub-portion (12) and, for every additional edge portion segment (15, 20, 23) located, a point which denotes the position of the edge portion segment (15, 20, 23) is entered into the list until the edge portion segment (15, 20, 23) which corresponds to the first point is reached again, the boundary being determined from the list of points.

2. Method according to claim 1, **characterised in that** the following steps are carried out:
a) starting from a portion segment, in particular an edge of the total portion, not belonging to the sub-portion (12), the first edge portion segment (15, 20, 23) belonging to the sub-portion is located along a path as the current edge portion segment (15, 20, 23), which is met along the path in a current search direction extending along a row or column of the matrix, then the following steps for locating additional edge portion segments (15, 20, 23) are carried out until the first edge portion segment (15, 20, 23) is reached once again by another edge portion segment (15, 20, 23):
b) checking whether, in a defined second search direction which is perpendicular to the current search direction, the portion segment (17, 25, 27) which is adjacent to the first edge portion segment (15, 20, 23) in a direction counter to the current search direction and does not belong to the sub-portion (12), is adjacent to an additional edge portion segment (15, 20, 23) of the sub-portion (12),
c) if the check in step b) is positive, setting the additional edge portion segment (15, 20, 23) as the current edge portion segment (15, 20, 23) and setting the second search direction as the current search direction and continuing with step b),
d) otherwise, checking whether the current edge portion segment (15, 20, 23) is adjacent to an additional edge portion segment (15, 20, 23) in the second search direction,
e) if the check in step d) is positive, setting the additional edge portion segment (15, 20, 23) as the current edge portion segment (15, 20, 23), maintaining the current search direction and continuing with step b),
f) otherwise, maintaining the current edge portion segment (15, 20, 23), setting the current search direction to a search direction counter to the defined second search direction and continuing with step b).

3. Method according to claim 2, **characterised in that** the defined second search direction is a direction which has been rotated clockwise by 90° from the current search direction.

4. Method according to any of the preceding claims, **characterised in that**, in order to determine the sub-portion (12) of the map (10) which depicts the remaining range of a motor vehicle (1) by means of an algorithm which uses energy costs assigned to the portion segments (11, 15, 17, 20, 23, 25, 27) in order to drive through the portion segment (11, 15, 17, 20, 23, 25, 27), in which, in the context of pathfinding, said algorithm is expanded from the current position (33) of the motor vehicle (1) into respectively adjacent portion segments (11, 15, 17, 20, 23, 25, 27) until residual energy which is contained in an energy storage system (3) and is intended for a drive (2) acting on at least one wheel of the motor vehicle (1) has been used up, each portion segment (11, 15, 17, 20, 23, 25, 27) entered during the pathfinding of the algorithm being marked as being associated with the sub-portion (12).

5. Method according to any of the preceding claims, **characterised in that** a centre point and/or another distinctive point of the portion segment (11, 15, 17, 20, 23, 25, 27) is viewed as the point for determining a line which represents a boundary (13) of the sub-portion (12).

6. Method according to any of the preceding claims, **characterised in that** a polygonal curve is determined as the boundary (13).

7. Method according to any of the preceding claims, **characterised in that** the determined boundary (13) is used to represent the sub-portion (12) together with the total portion, in particular the map (10).

8. Method according to any of the preceding claims, **characterised in that** the sub-portion (12) does not touch the edge of the matrix.

9. Method according to any of claims 1 to 7, **characterised in that**, if a sub-portion (12) touches the edge of the matrix, steps are taken along the edge of the matrix until another portion segment (17, 25, 27) which does not belong to the sub-portion (12) is located on the edge of the matrix.

10. Motor vehicle (1) comprising a drive (2) which acts on at least one wheel of the motor vehicle (1), an energy storage system (3) for the drive (2) and a calculation device (7) designed to carry out a method according to any of the preceding claims regarding a sub-portion which depicts the remaining range of the motor vehicle (1).

## Revendications

1. Procédé de détermination automatique d'une délimitation (13) d'une surface partielle (12) d'une surface globale affichant l'autonomie d'un véhicule automobile (1), en particulier d'une carte (10), dans lequel la surface globale est subdivisée en une matrice de segments de surface rectangulaires (11, 15, 17, 20, 23, 25, 27), auxquels appartient une quantité partielle connexe de la surface partielle (12) et dans lequel la surface partielle (12) est le résultat d'un algorithme déterminant l'autonomie restante du véhicule automobile (1),
**caractérisé en ce que** :
on recherche tout d'abord, à partir d'une zone de la surface globale n'appartenant pas à la surface partielle (12), un segment de surface marginal (15, 20, 23) de la surface partielle (12) et on inscrit un premier point décrivant la position du segment de surface marginal (15, 20, 23) dans une liste de points, après quoi on passe sur le bord de la surface partielle (12) le long de celle-ci et on inscrit dans la liste pour chaque autre segment de surface marginal recherché (15, 20, 23) un point décrivant la position du segment de surface marginal (15, 20, 23) jusqu'à ce que soit atteint à nouveau le segment de surface marginal (15, 20, 23) correspondant au premier point, dans lequel la délimitation est déterminée à partir de la liste de points.

2. Procédé selon la revendication 1,
**caractérisé en ce que** les étapes suivantes sont effectuées :
a) à partir d'un segment de surface n'appartenant pas à la surface partielle (12), en particulier d'un bord de la surface globale, on recherche le long d'une voie le premier segment de surface marginal (15, 20, 23) appartenant à la surface partielle comme segment de surface marginal courant (15, 20, 23), on passe sur celui-ci le long de la voie dans une direction de recherche courante s'étendant le long d'une rangée ou d'une colonne de la matrice, puis, jusqu'à atteindre de nouveau le premier segment de surface marginal (15, 20, 23) depuis un autre segment de surface marginal (15, 20, 23), on réalise les étapes suivantes afin de rechercher d'autres segments de surface marginaux (15, 20, 23) :
b) on vérifie si, dans une seconde direction déterminée de recherche qui est perpendiculaire à la direction de recherche courante, il se présente au voisinage d'un segment de surface (17, 25, 27) n'appartenant pas à la surface partielle (12) adjacent au premier segment de surface (15, 20, 23) à l'encontre de la direction de recherche courante un autre segment de surface marginal (15, 20, 23) de la surface partielle (12),
c) au cas où la vérification de l'étape b) est concluante, on prend l'autre segment de surface marginal (15, 20, 23) comme segment de surface marginal courant (15, 20, 23) et la seconde direction de recherche comme direction de recherche courante et l'on continue avec l'étape b),
d) autrement on vérifie s'il se présente au voisinage du segment de surface courant (15, 20, 23) dans la seconde direction de recherche un autre segment de surface marginal (15, 20, 23),
e) au cas où la vérification de l'étape d) est concluante, on prend l'autre segment de surface marginal (15, 20, 23) comme segment de surface marginal courant (15, 20, 23), on conserve la direction de recherche courante et l'on continue avec l'étape b),
f) autrement on conserve le segment de surface marginal courant (15, 20, 23), on règle la direction de recherche courante sur une direction de recherche opposée à la seconde direction de recherche déterminée et on continue avec l'étape b).

3. Procédé selon la revendication 2,
**caractérisé en ce que** :
la seconde direction de recherche déterminée est une direction tournée de 90° de la direction de recherche courante dans le sens des aiguilles d'une montre.

4. Procédé selon l'une quelconque des revendications précédentes,
**caractérisé en ce que**,
pour déterminer la surface partielle (12) de la carte (10) décrivant l'autonomie restante d'un véhicule automobile (1) sur la base d'un algorithme se basant sur les coûts d'énergie affectés aux segments de surface (11, 15, 17, 20, 23, 25, 27) pour parcourir le segment de surface (11, 15, 17, 20, 23, 25, 27), dans lequel algorithme, dans la cadre d'une recherche de route, on s'étend depuis la position courante (33) du véhicule automobile (1) à des segments de surface respectivement voisins (11, 15, 17, 20, 23, 25, 27) jusqu'à ce que l'on épuise une énergie restante contenue dans un système d'accumulation d'énergie (3) pour un entraînement (2) opérant sur au moins une roue du véhicule automobile (1), chaque élément de surface visité (11, 15, 17, 20, 23, 25, 27) dans la recherche de route de l'algorithme est marqué en conséquence.

5. Procédé selon l'une quelconque des revendications précédentes,
**caractérisé en ce que** :
l'on considère comme point pour déterminer une ligne représentant une délimitation (13) de la surface partielle (12) un point central et/ou un autre point remarquable du segment de surface (11, 15, 17, 20, 23, 25, 27).

6. Procédé selon l'une quelconque des revendications précédentes,
**caractérisé en ce que** l'on détermine comme délimitation (13) un tracé polygonal.

7. Procédé selon l'une quelconque des revendications précédentes,
**caractérisé en ce que** :
la délimitation déterminée (13) pour la représentation de la surface partielle (12) est utilisée conjointement avec la surface globale, en particulier la carte (10).

8. Procédé selon l'une quelconque des revendications précédentes,
**caractérisé en ce que** :
la surface partielle (12) ne vient pas en contact avec le bord de la matrice.

9. Procédé selon l'une quelconque des revendications 1 à 7,
**caractérisé en ce que**,
dans le cas d'une surface partielle (12) venant en contact avec le bord de la matrice, on part le long du bord de la matrice jusqu'à ce que l'on trouve à nouveau un segment de surface (15, 25, 27) n'appartenant pas à la surface partielle (12) sur le bord de la matrice.

10. Véhicule automobile (1) comprenant un entraînement (2) opérant sur au moins une roue du véhicule automobile (1), un système d'accumulation d'énergie (3) pour l'entraînement (2) et un dispositif de calcul (7) conçu pour réaliser un procédé selon l'une quelconque des revendications précédentes concernant une surface partielle décrivant l'autonomie restante du véhicule automobile (1).
